# EUROPEAN PATENT APPLICATION

(11) **EP 1 418 066 A2**
(43) Date of publication of application: **12.05.2004**
(21) Application number: 03257105.1
(22) Date of filing: 11.11.2003
(51) Int. Cl.: B60B 27/00

(54) **Supporting structure of axle hub**

(30) Priority: 11.11.2002 JP 2002326636
(71) Applicant: HONDA MOTOR CO., Ltd., Tokyo (JP)
(72) Inventor: Kai, Shunnosuke, Wako-shi Saitama (JP); Yoshimura, Yasunori, Wako-shi Saitama (JP); Wada, Shinji, Wako-shi Saitama (JP)
(74) Representative: Piésold, Alexander J.

(57) **Abstract**

An elastic body 35 of a seal member 30 for sealing off a space between an outer race 26 and an inner race 27 of a bearing 15 has three seal lips 35a to 35c and an extending portion 35d. By allowing the extending portion 35 to be held in place in a gap α between an axial end face of the outer race 26 of the bearing 15 and an axial end face of a bearing support hole in a knuckle 13, the penetration of water into the gap α can be prevented by making use of the existing seal member while avoiding increases in the numbers of components to be assembled and man-hours needed to assemble the components by obviating the necessity of any special seal member, whereby the generation of rust resulting from electrolytic corrosion can be prevented effectively.

## Description

The present invention relates to a supporting structure of an axle to a knuckle for supporting rotatably an axle hub on a knuckle via a bearing.

A structure for rotatably supporting an axle hub which is spline connected to a drive axle of an automobile to support a wheel on a knuckle via a bearing is known from Examined Japanese Utility Model No. Hei8-6569. In this structure, an inner race and an outer race of the bearing are press fitted on an outer circumference of the axle hub and in an inner circumference of the knuckle, respectively, and in order to prevent water and/or sand from entering the ball bearing, a seal member is disposed between the axle hub and the knuckle at a transversely outboard end of the bearing, whereas a seal member is disposed between the drive axle and the knuckle at a transversely inboard end thereof.

Incidentally, when the seal members are disposed at both the transverse ends of the bearing, while the penetration of water and/or sand into the interior of the bearing can be prevented, it is difficult to prevent the penetration of water into a gap between the outer race and the inner race of the bearing. In particular, in a case where the knuckle and the outer race are made of different types of metal, for example, aluminum and iron, respectively, a potential difference is generated between the knuckle and the outer race due to the penetration of water to thereby cause a stray current to flow, leading to a case where an electrolytic corrosion may be generated in the aluminum knuckle. The generation of such an electrolytic corrosion becomes remarkable when water containing salt (an electrolytic water) penetrates into a gap between the knuckle and the outer race as a result of an automobile running on a road near the seaside or a road over which a snow-melting agent is sprinkled.

In a case where the knuckle and the outer race are connected together through press fit, since the gap is difficult to be made, the possibility that water penetrates into such a gap is reduced. However, in a case where the knuckle and the outer race are bolted together, since the gap becomes large, the possibility that water penetrates into the gap is increased, and there is caused a concern about a case where the knuckle and the outer race cannot be separated from each other due to rust gathered by virtue of the electrolytic corrosion so generated.

The invention is made in view of the above situation, and an object thereof is to provide a supporting structure of an axle hub on a knuckle via a bearing which can securely prevent the penetration of water into a gap between the outer race of the bearing and the knuckle.

According to a first aspect of the invention, there is proposed a structure for supporting rotatably an axle hub on a knuckle via a bearing, including an elastic body with a seal lip for sealing off a space between an outer race and an inner race of the bearing and an annular extending portion integrally formed on the elastic body and held in place in a gap between an axial end face of the outer race of the bearing and an axial end face of a bearing support hole in the knuckle.

According to the construction as described above, since the annular extending portion formed integrally on the elastic body having the seal lip for sealing off the space between the outer race and the inner race of the bearing is held in place in the gap between the axial end face of the outer race and the axial end face of the bearing support hole in the knuckle, the penetration of water into the gap can be prevented by making use of the existing seal member while avoiding increases in the numbers of components to be assembled and man-hours needed to assemble the components by obviating the necessity of any special seal member, whereby the generation of rust resulting from electrolytic corrosion can be prevented effectively.

According to a second aspect of the invention, there is proposed a supporting structure of an axle hub on a knuckle as set forth in the first aspect of the invention, wherein the outer race of the bearing and the knuckle are fastened together by means of a bolt.

According to the construction as described above, since the outer race of the bearing and the knuckle are fastened together by means of the bolt, even if the gap between the outer race and the knuckle becomes larger than when they are connected together through press fit, the penetration of water from the enlarged gap can securely be prevented.

Certain preferred embodiments of the invention will now be described by way of example and with reference to the accompanying drawings.
Fig. 1 is a vertical sectional view of a drive wheel part.
Fig. 2 is an enlarged view of a portion indicated by reference numeral 2 in Fig. 1.
Fig. 3 is an enlarged view of a portion indicated by reference numeral 3 in Fig. 2.
Figs. 4A and 4B illustrate seal members according to other embodiments.

Note that first seal lip 35a to third seal lip 35c in a first embodiment correspond to the seal lip of the invention.

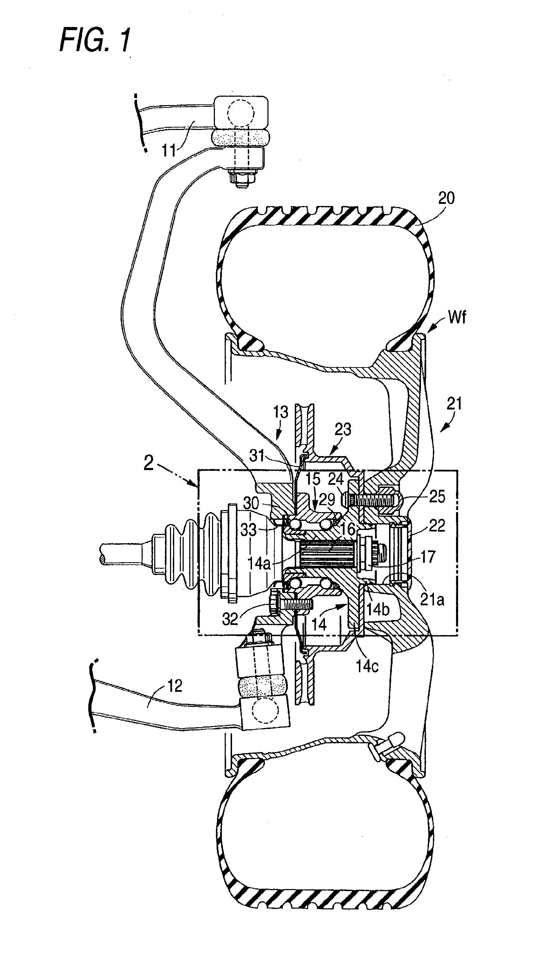

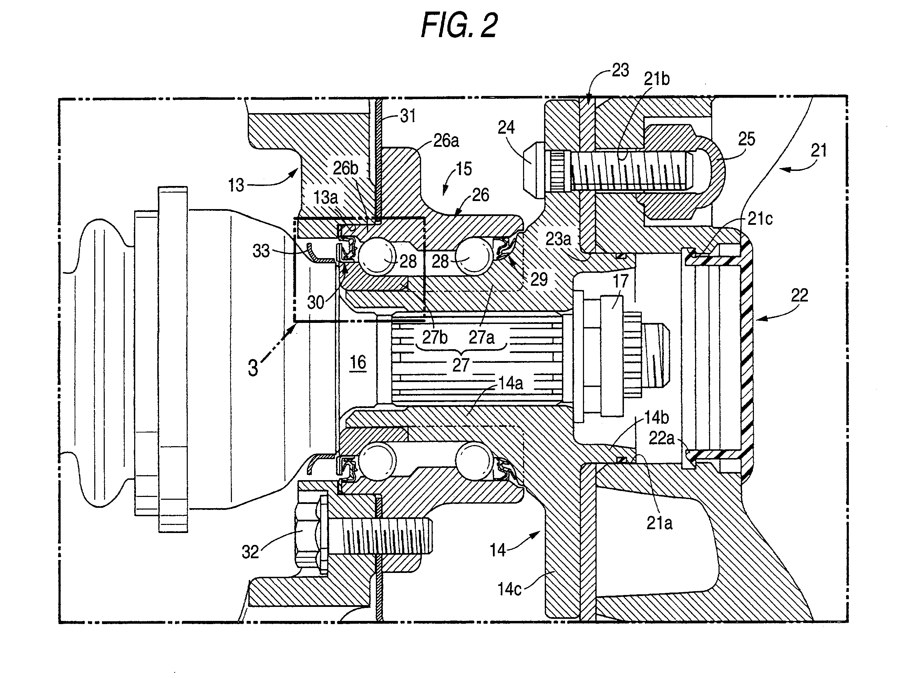

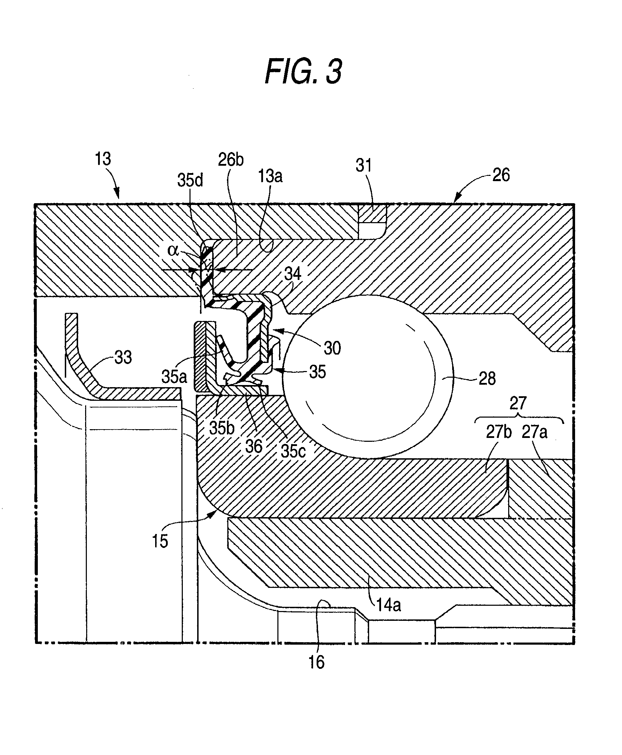

Figs. 1 to 3 are drawings showing a first embodiment of the invention, in which Fig. 1 is a vertical sectional view of a drive wheel part, Fig. 2 is an enlarged view of a portion indicated by reference numeral 2 in Fig. 1, and Fig. 3 is an enlarged view of a portion indicated by reference numeral 3 in Fig. 2.

As shown in Figs. 1 and 2, a knuckle 13 is supported on a vehicle body via an upper arm 11 and a lower arm 12 in such a manner as to move vertically, and a drive wheel Wf is rotatably supported on an axle hub 14 which is supported on the knuckle 13 via a bearing 15 (a bearing provided with a sealing function). A drive axle 16 is spline fitted in a center of the axle hub 14 and is then secured in place by means of a nut 17, whereby the driving force of an engine is transmitted from the drive axle 16 via the axle hub 14 to the drive wheel Wf. A short cylindrical hub portion 14b is concentrically and integrally formed on an outboard end of a shaft portion 14a of the axle hub 14, and a disc-like flange 14c is integrally formed between the shaft portion 14a and the hub portion 14b.

The drive wheel Wf includes a tire 20 and a tire wheel 21, and a plurality of (five in this embodiment) bolt holes 21b ... are formed in such a manner as to surround the periphery of a circular hub hole 21a formed in a center of the tire wheel 21. Acenter cap 22 covering the hub hole 21a is fixed by bringing a plurality of claw-like locking portions 22a ... provided on a back thereof into locking grooves 21c formed in the hub hole 21a. A circular hub hole 23a formed in a center of a brake disc 23 and the hub hole 21a in the tire wheel 21 fit on the hub portion 14b of the axle hub 14, and five hub bolts 24 ... which are inserted from an inner side of the flange 14c of the axle hub 14 pass through the brake disc 23 and the five holt holes 21b ... in the tire wheel 21 and are then tightened with five wheel nuts 25 ..., respectively.

The bearing 15 which supports the axle hub 14 on the knuckle 13 has an outer race 26, an inner race 27 and a number of balls 28 ... which are arranged in two lines between the outer race 26 and the inner race 27. The inner race 27 is divided into two parts, and a first part 27a is formed integrally with the axle hub 14 (refer to broken lines in Fig. 2), and a second part 27b is made up of an independent member. The second part 27b of the inner race 27 is fixed to the shaft portion of the axle hub 14 by virtue of press fit. Note that, in this case, the first part 27a may be formed separately from the axle hub 14.

A seal member 29 for sealing off a space between the outer race 26 and the first part 27a of the inner race 27 is disposed at a transversely outboard end of the bearing 15, and a seal member 30 for sealing off a space between the outer race 26 and the second part 27b of the inner race 27 is disposed at a transversely inboard end of the bearing 15. These seal members 29, 30 function to prevent water and/or sand from entering the interior of the bearing 15, in other words, a space surrounded by the outer race 26 and the inner race 27 for accommodating the balls 28 ...

The outer race 26 of the bearing 15 has a flange 26a and a knuckle connecting portion 26b, and the knuckle connecting portion 26b fits in an inner circumference of an annular bearing support hole 13a formed in the knuckle 13 with a shield plate 31 being caused to overlap a transversely inboard end face of the flange 26a. In this condition, the knuckle 13, the shield plate 31 and the outer race 26 are fastened together with a plurality of (four in this embodiment) bolts 32 ... which are disposed at regular intervals in a circumferential direction. The shield plate 31 functions to prevent the penetration of water, sand and/or powdered brake pad resulting when a brake pad gets worn into the periphery of the bearing 15. In addition, a shield plate 33 is press fitted on an outer circumference of a housing of a constant velocity joint which continues to a transversely inboard end of the drive axle 16 to thereby prevent the penetration of water and/or sand to a seal member 30 side by virtue of a labyrinth effect.

Next, referring to Fig. 3, the construction of the seal member 30 will be described.

The seal member 30 is such as to be formed by vulcanizing and baking an elastic body 35 such as a rubber to an outer ring 34 having an L-shaped cross section, and first seal lip 35a to third seal lip 35c each having an annular shape and an annular extending portion 35d which extends radially outwardly are formed integrally on the elastic body 35. An inner ring 36 having an L-shaped cross section is fixed to an outer circumference of the second part 27b of the inner race 27 of the bearing 15 by virtue of press fit, and the outer ring 34 of the seal member 30 is press fitted in an inner circumferential surface of the outer race 26 in such a manner as to confront a radially outward portion of the inner ring member 36. In this condition, the first seal lip 35a to the third seal lip 35c of the elastic body 35 abut against the inner ring 36, whereby a seal function is exhibited.

The dimensional relationship among the knuckle 13, shield plate 31 and outer race 26 is set such that a slight gap α is formed between an axial end face of the knuckle connecting portion 26b of the outer race 26 and an axial end face of the bearing support hole 13a in the knuckle 13 when the knuckle 13, shield plate 31 and outer race 26 are fastened together with the bolts 32 ... Then, the extending portion 35d of the elastic body 35 of the seal member 30 which extends radially outwardly is held between the knuckle 13 and the outer race 26 in the gap α. As shown by a chain line, the extending portion 35d in a free state is bent to form a V-like shape, and when it is held between the knuckle 13 and the outer race 26, the V-like bent extending portion 35d is press collapsed to become flat, whereby strong sealing properties are exhibited.

As is described above, the transversely outboard side of the bearing is covered with the brake disc 23, and the transversely inboard side thereof is covered with the two shield plates 31, 32. However, it cannot be helped that a slight amount of water and/or sand enters the periphery of the bearing 15. However, water and/or sand that has so entered the periphery of the bearing 15 can be prevented from entering the interior of the bearing 15 by the two seal members 29, 30 provided on the bearing 15, and therefore, there occurs no case where water and/or sand is allowed to enter the interior of the bearing 15.

In case water penetrates into the gap α formed between the outer race 26 and the knuckle 13, there may be caused a case where a stray current flows between the outer race 26, which is made of iron and the knuckle 13, which is made of aluminum, to cause an electrolytic corrosion in the aluminum knuckle 13, and furthermore, in case salt is contained in the water, the electrolytic corrosion may be enhanced. According to the embodiment, however, since the extending portion 35 which is formed integrally with the elastic body 35 of the seal member 30 is held in place in the gap α between the outer race 26 and the knuckle 13 to seal off the gap, the occurrence of electrolytic corrosion due to the penetration of water into the gap α can securely be prevented. Moreover, since the extending portion 35d is formed integrally with the elastic body 35 of the seal member 30, the necessity of any special seal member for sealing off the gap α is obviated, and hence, there is caused no risk that the numbers of components to be assembled and man-hours needed to assemble the components are increased.

Note that since the fastening force of the bolts 32 ... is directly applied to the end face of the flange 26a of the outer race 26 of the bearing 15 or the portion which is connected to the knuckle 13 via the shield plate 31, a gap is difficult to be produced in the portion, and hence, there is caused no risk that water penetrates therefrom.

Thus, since the gap between the outer race 26 and the knuckle 13 is sealed off by making use of the seal member 30, which is one of the seal members of the bearing 15, rust is prevented from gathering due to electrolytic corrosion, and the occurrence of a case can be prevented where the outer race 26 and the knuckle 13 become inseparable due to rust that would otherwise be gathered.

Thus, while the embodiment of the invention is described heretofore, various modifications to the design of the invention can be made without departing from the scope of the invention.

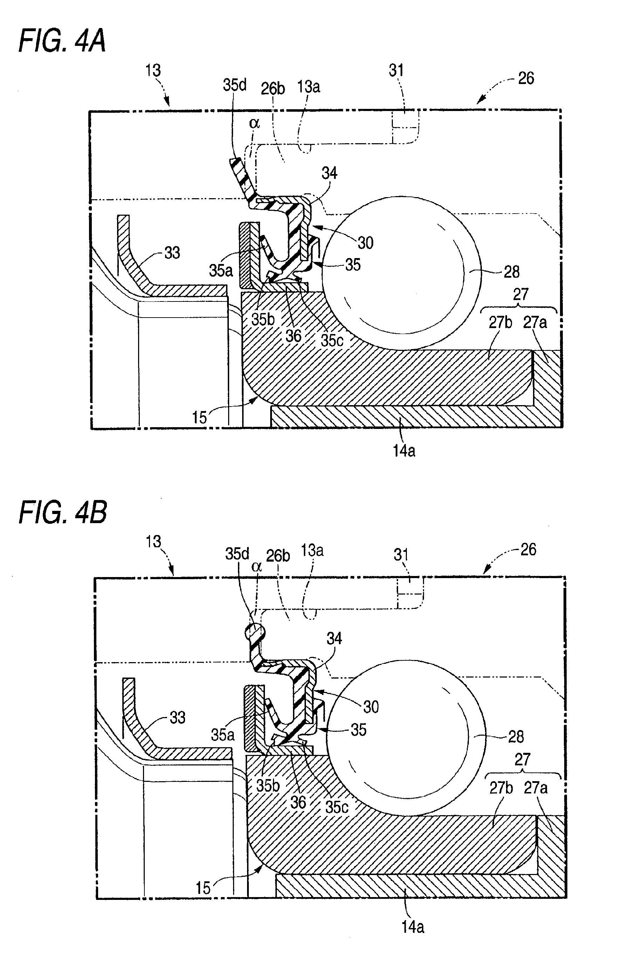

For example, the cross-sectional configuration of the extending portion 35d provided on the elastic body 35 of the seal member 30 is not limited to the V-like bent cross-sectional configuration adopted in the embodiment. As illustrated in a second embodiment shown in Fig. 4A, a cross-sectional configuration may be adopted in which an extending portion 35d of a substantially constant thickness is inclined in a radial direction, or as illustrated in a third embodiment shown in Fig. 4B, a cross-sectional configuration may be adopted in which a distal end of the extending portion 35d is expanded.

In addition, while, in the embodiment, the outer race 26 of the bearing 15 is fastened to the knuckle 13 with the bolts 32 ..., a construction may be adopted in which the outer race 26 is press fitted in the knuckle 13. However, since the gap tends to be produced more easily between the outer race 26 and the knuckle 13 when the outer race 26 is fastened to the knuckle 13 with the bolts 32 ... than when the outer race 26 is press fitted in the knuckle 13, whereby water is allowed to enter the gap more easily, the advantage of the invention can be exhibited more remarkably in the former case.

In addition, while, in the embodiment, the knuckle 13 is made of aluminum and the outer race 26 of the bearing 15 is made of iron, thematerials of those components can be selected appropriately.

According to the first aspect of the invention, since the annular extending portion formed integrally on the elastic body having the seal lip for sealing off the space between the outer race and the inner race of the bearing is held in place in the gap between the axial end face of the outer race and the axial end face of the bearing support hole in the knuckle, the penetration of water into the gap can be prevented by making use of the existing seal member while avoiding increases in the numbers of components to be assembled and man-hours needed to assemble the components by obviating the necessity of any special seal member, whereby the generation of rust resulting from electrolytic corrosion can be prevented effectively.

According to the second aspect of the invention, since the outer race of the bearing and the knuckle are fastened together by means of the bolt, even if the gap between the outer race and the knuckle becomes larger than when they are connected together through press fit, the penetration of water from the enlarged gap can securely be prevented.

## Claims

1. A structure for supporting rotatably an axle hub (14) on a knuckle (13) via a bearing (15) comprising:
an elastic body (35) including a seal lip (35a to 35c) for sealing off a space between an outer race (26) and an inner race (27) of the bearing (15),and
an annular extending portion (35d) integrally formed on the elastic body (35) and held in place in a gap (α) between an axial end face of the outer race (26) of the bearing (15) and an axial end face of a bearing support hole (13a) in the knuckle (13).

2. A structure as claimed in Claim 1, wherein
the outer race (26) of the bearing (15) and the knuckle (13) are fastened together by means of a bolt (32).
